# EUROPÄISCHE PATENTANMELDUNG

(11) **EP 4 815 628 A1**
(43) Veröffentlichungstag der Anmeldung: **30.09.2026**
(21) Anmeldenummer: 26159990.6
(22) Anmeldetag: 23.02.2026
(51) Int. Cl.: H05B 45/10, A63H 33/04, F21S 43/237, G02B 6/42, H05B 47/19

(54) **VORRICHTUNG ZUR VERTEILUNG VON LICHT IN EINEM KLEMMBAUSTEINMODELL**

(30) Priorität: 05.03.2025 CN 202510257627
(71) Anmelder: Doubleeagle Industry (China) Limited, Shantou City, Guangdong (CN)
(72) Erfinder: Yang, Dunhua, N0.1 Yabao Road, Shenzhen (CN)
(74) Vertreter: von Bülow & Tamada

(57) **Zusammenfassung**

Offenbart wird eine Vorrichtung (22) zur Verteilung von Licht (60) in einem Klemmbausteinmodell (2), umfassend:
- eine erste Lichtquelle (32) und eine zweite Lichtquelle (32),
- eine Steuerschaltung (30) zur Steuerung eines Betriebszustandes der ersten Lichtquelle (32) und eines Betriebszustandes der zweiten Lichtquelle (32),
- ein die Steuerschaltung (30) und die Lichtquellen (32) einhausendes Gehäuse (24, 26)
-- mit einer ersten Anschlussschnittstelle (36) zum Halten eines ersten Endes eines ersten Lichtwellenleiters (58) in einer Position, in der der erste Lichtwellenleiter (58) in der Lage ist, mit seinem ersten Ende das aus der ersten Lichtquelle (32) abgegebene Licht (60) zu empfangen und zu seinem zweiten Ende zu leiten, und
-- mit einer zweiten Anschlussschnittstelle (36) zum Halten eines ersten Endes eines zweiten Lichtwellenleiters (58) in einer Position, in der der zweite Lichtwellenleiter (58) in der Lage ist, mit seinem ersten Ende das aus der zweiten Lichtquelle (32) abgegebene Licht (60) zu empfangen und zu seinem zweiten Ende zu leiten.

## Beschreibung

Die Erfindung betrifft eine Vorrichtung zur Verteilung von Licht in einem Klemmbausteinmodell.

Zur Beleuchtung eines Klemmbausteinmodells wird elektrische Energie transportiert, indem Strom über dünne Kabel oder Leiterbahnen zu den Beleuchtungsstellen im Modell geleitet wird. Vor Ort wird das Licht mithilfe geeigneter Wandler, wie Glühbirnen, LEDs oder ähnlicher Technologien, erzeugt. Aus der DE 100 24 648 A1 ist beispielsweise bekannt, dass elektrische Energie auch kabellos auf induktivem Wege übertragen werden kann, wobei die Umwandlung der elektrischen Energie in Licht dennoch direkt an den Beleuchtungsorten erfolgt.

Es ist die Aufgabe der Erfindung, die Beleuchtung in einem Klemmbausteinmodell zu verbessern.

Die Aufgabe wird durch die Merkmale des unabhängigen Anspruchs gelöst. Bevorzugte Weiterbildungen sind Gegenstand der abhängigen Ansprüche.

Gemäß einem Aspekt der Erfindung umfasst eine Vorrichtung zur Verteilung von Licht in einem Klemmbausteinmodell eine erste Lichtquelle und eine zweite Lichtquelle, eine Steuerschaltung zur Steuerung eines Betriebszustands der ersten Lichtquelle und eines Betriebszustands der zweiten Lichtquelle, ein die Steuerschaltung und die Lichtquellen einhausendes Gehäuse mit einer ersten Anschlussschnittstelle zum Halten eines ersten Endes eines ersten Lichtwellenleiters in einer Position, in der der erste Lichtwellenleiter mit seinem ersten Ende das aus der ersten Lichtquelle abgegebene Licht empfangen und zu seinem zweiten Ende leiten kann, und mit einer zweiten Anschlussschnittstelle zum Halten eines ersten Endes eines zweiten Lichtwellenleiters in einer Position, in der der zweite Lichtwellenleiter mit seinem ersten Ende das aus der zweiten Lichtquelle abgegebene Licht empfangen und zu seinem zweiten Ende leiten kann.

Im Gegensatz zur eingangs genannten Beleuchtung wird mit der angegebenen Vorrichtung vorgeschlagen, elektrische Energie in Licht nicht mehr direkt an den Beleuchtungspunkten im Modell, sondern zentralisiert am Energieverteilungspunkt umzuwandeln. Das bedeutet, die Lichtquellen am Energieverteilungspunkt zu positionieren und das erzeugte Licht von dort aus mittels Lichtwellenleitern zu den einzelnen Beleuchtungsstellen im Modell zu transportieren.

Diesem Vorschlag liegt die Überlegung zugrunde, den Prozess der Lichterzeugung aus den oft schwer zugänglichen und räumlich begrenzten Beleuchtungspunkten zu einem zentralen Ort zu verlagern. Dies ermöglicht es, das Licht effektiv zu bündeln und über Lichtwellenleiter flexibel und effizient an die gewünschten Stellen zu transportieren. Dadurch werden nicht nur technische Einschränkungen des bisherigen Ansatzes überwunden, sondern auch neue Gestaltungsmöglichkeiten eröffnet.

Da Lichtwellenleiter anstelle von elektrischen Leitungen das Licht zu den Beleuchtungspunkten transportieren, entfällt der Bedarf an empfindlichen Kabeln, die elektrische Energie zu diesen Stellen führen müssen. Lichtwellenleiter sind stabiler und widerstandsfähiger gegen mechanische Beanspruchungen, was die Konstruktion erheblich vereinfacht. Dadurch wird nicht nur der Verkabelungsaufwand reduziert, sondern auch das Risiko von Kabelbrüchen oder Verbindungsproblemen minimiert. Dies trägt zu einer robusteren und langlebigeren Beleuchtungslösung bei.

Durch die Verlagerung der Lichtquellen in einen zentralen Energieverteilungspunkt werden an den Beleuchtungspunkten keine LEDs oder anderen Lichtquellen mehr benötigt. Dadurch entsteht mehr Bauraum, was besonders in kleinen Modellen von Vorteil ist, da der begrenzte Platz vollständig für die Modellkonstruktion genutzt werden kann.

Insbesondere bei komplexen Modellen müssen zudem defekte Lichtquellen nicht mehr an schwer zugänglichen oder beengten Stellen im Modell ausgetauscht werden. Stattdessen können sie zentral in der Vorrichtung gewartet oder ersetzt werden, was die Reparatur und Pflege des Modells deutlich erleichtert.

In einer Weiterbildung der angegebenen Vorrichtung umfasst die Steuerschaltung ein erstes Steuerelement zur individuellen Steuerung der ersten Lichtquelle, ein zweites Steuerelement zur individuellen Steuerung der zweiten Lichtquelle und ein drittes Steuerelement zur gemeinsamen Steuerung der ersten und zweiten Lichtquelle. Durch die individuelle Steuerung der Lichtquellen können verschiedene Beleuchtungspunkte im Modell unabhängig voneinander mit Licht in unterschiedlichen Intensitäten, Farben oder Effekten versorgt werden. Dies erhöht die Flexibilität und ermöglicht es, Beleuchtungsszenarien präzise an die Anforderungen des Modells anzupassen. Gleichzeitig bietet das dritte Steuerelement die Möglichkeit, beide Lichtquellen synchron zu steuern, wodurch sich beispielsweise beim Einschalten des Lichts ein vordefinierter, aber dennoch individuell einstellbarer Beleuchtungszustand umsetzen lässt. Die Kombination aus individueller und gemeinsamer Steuerung vereint Kreativität mit Effizienz und eröffnet vielseitige Gestaltungsmöglichkeiten, ohne die Bedienbarkeit zu erschweren.

In einer besonderen Weiterbildung der angegebenen Vorrichtung umfasst das dritte Steuerelement einen Schalter, mit dem die Betriebszustände der ersten und zweiten Lichtquelle gemeinsam eingestellt werden können. Diese Gestaltung bietet die Möglichkeit, durch einfache sequentielle Tastencodes unterschiedliche Beleuchtungszustände zu realisieren. Beispielsweise kann ein einzelner Tastendruck die Lichtquellen ein- oder ausschalten, während wiederholte oder längere Tastendrücke Änderungen an Helligkeit, Blinkmustern oder Farbmodulationen vornehmen. Dies ermöglicht eine intuitive Bedienung, da komplexe Steuerungen über eine einfache Interaktion mit dem Schalter umgesetzt werden können. Der Nutzer erhält so eine flexible und unkomplizierte Möglichkeit, verschiedene Beleuchtungseffekte zu erzeugen, ohne zusätzliche Steuergeräte oder komplizierte Programmierungen zu benötigen. Dadurch wird die Bedienung der Beleuchtung insbesondere in kompakten und detailreichen Klemmbausteinmodellen erheblich vereinfacht, während gleichzeitig ein breites Spektrum an Lichteffekten zur Verfügung steht.

In einer besonderen Weiterbildung umfasst die angegebene Vorrichtung eine Datenübertragungsschnittstelle, die eingerichtet ist, eine individuelle Steueranweisung zum Einstellen des Betriebszustands der ersten Lichtquelle zu empfangen und an das erste Steuerelement weiterzuleiten sowie eine individuelle Steueranweisung zum Einstellen des Betriebszustands der zweiten Lichtquelle zu empfangen und an das zweite Steuerelement weiterzuleiten. Diese Datenübertragungsschnittstelle eröffnet die Möglichkeit, komplexere Bedienschnittstellen auf bereits vorhandene Ressourcen wie Computer, Mobiltelefone oder Tablets zu verlagern. Durch die Nutzung solcher Geräte kann die Steuerung der Lichtquellen über intuitive und benutzerfreundliche Oberflächen wie Apps oder Softwareanwendungen erfolgen. Diese ermöglichen nicht nur eine präzise Kontrolle der Beleuchtungsparameter wie Helligkeit, Farben oder Blinkmuster, sondern auch die Erstellung und Verwaltung von komplexen Beleuchtungsszenarien. Mit diesem Ansatz werden physische Schalter oder Bedienelemente am Gerät auf ein Minimum reduziert, was die Baugröße der Vorrichtung verringert und deren Einsatzmöglichkeiten erweitert. Gleichzeitig können Nutzer von der Leistungsfähigkeit und dem Bedienkomfort ihrer bereits vorhandenen Geräte profitieren, ohne zusätzliche Steuereinheiten oder Displays in das System integrieren zu müssen.

In einer bevorzugten Weiterbildung der angegebenen Vorrichtung ist die Datenübertragungsschnittstelle eingerichtet, die Steueranweisung drahtlos, vorzugsweise mit einem Protokoll nach Bluetooth, zu empfangen. Die Verwendung einer drahtlosen Datenübertragungsschnittstelle bietet neben einem geringeren Verkabelungsaufwand zahlreiche Vorteile. So ermöglicht sie eine größere Flexibilität bei der Platzierung, da die Vorrichtung unabhängig von der Position des Steuergeräts betrieben werden kann. Zusätzlich wird die Steuerung durch die erweiterte Reichweite erleichtert, da das Modell aus der Distanz kontrolliert werden kann, ohne dass physische Verbindungen erforderlich sind. Insbesondere Bluetooth als Standardprotokoll gewährleistet außerdem eine hohe Kompatibilität mit bestehenden Geräten wie Smartphones oder Tablets, wodurch zusätzliche Steuerhardware überflüssig wird. Das Fehlen physischer Schnittstellen reduziert zudem die Baugröße der Vorrichtung und minimiert das Risiko von mechanischen Defekten wie Kabelbrüchen oder Kurzschlüssen durch Verunreinigungen. Darüber hinaus vereinfacht die drahtlose Kommunikation die Nachrüstung in bestehende Modelle erheblich, da keine Kabel durch das Modell geführt werden müssen.

In einer anderen Weiterbildung umfasst die angegebene Vorrichtung einen Speicher zum Speichern der eingestellten Betriebszustände der ersten und zweiten Lichtquelle, der zweckmäßigerweise nichtflüchtig ausgebildet sein sollte. Die Integration eines Speichers zum Speichern der eingestellten Betriebszustände der ersten und zweiten Lichtquelle, insbesondere wenn dieser Speicher nichtflüchtig ausgebildet ist, bietet mehrere Vorteile. Ein entscheidender Vorteil liegt darin, dass die Beleuchtungseinstellungen auch nach dem Ausschalten oder einer Unterbrechung der Stromversorgung erhalten bleiben. Dadurch müssen die bevorzugten Betriebszustände nicht bei jedem Neustart der Vorrichtung erneut eingestellt werden, was den Bedienkomfort erheblich erhöht. Ein weiterer Vorteil ist die Möglichkeit, individuelle oder komplexe Beleuchtungsszenarien dauerhaft zu speichern. Dies ist besonders nützlich, wenn das Modell regelmäßig verwendet wird und unterschiedliche Lichtmodi für verschiedene Anlässe oder Präsentationen benötigt werden. Der nichtflüchtige Speicher ermöglicht es, solche Szenarien dauerhaft zu speichern und bei Bedarf schnell abzurufen. Zusätzlich wird die Bedienung durch diesen Speicher robust gegenüber kurzzeitigen Unterbrechungen, etwa durch Wackelkontakte oder versehentliches Trennen der Stromversorgung. Die Beleuchtung setzt nach Wiederherstellung der Energieversorgung automatisch die vorherige Konfiguration fort, ohne dass manuelle Eingriffe notwendig sind.

In einer weiteren Weiterbildung der angegebenen Vorrichtung ist jede Anschlussschnittstelle jeweils als durch das Gehäuse geführte Hülse ausgeführt, die an einer zur Gehäuseaußenseite hin gerichteten Stirnseite zur Aufnahme des jeweiligen Lichtwellenleiters geöffnet und mit ihrer Bodenseite oberhalb der jeweiligen Lichtquelle angeordnet ist. Zwar könnten statt Hülsen zur Fixierung auch andere Mechanismen wie federbasierte Klemmsysteme, Schraubverbindungen oder elastische Membranen verwendet werden, Hülsen sind jedoch besonders vorteilhaft, weil sie eine präzise und stabile Positionierung des Lichtwellenleiters relativ zur Lichtquelle gewährleisten. Durch ihre feste Führung wird sichergestellt, dass der Lichtwellenleiter optimal über der Lichtquelle ausgerichtet ist, was die Effizienz der Lichteinkopplung maximiert. Zudem schützt die Hülse den Lichtwellenleiter mechanisch vor äußeren Einflüssen wie Zug- oder Druckkräften und bietet eine einfache, robuste und wartungsarme Konstruktion. Diese Eigenschaften machen die Hülse zu einer funktionalen und zuverlässigen Lösung, die sich insbesondere für Anwendungen eignet, bei denen eine hohe Präzision und mechanische Stabilität erforderlich sind.

In einer zusätzlichen Weiterbildung der angegebenen Vorrichtung ist die Bodenseite jeder Hülse mit einem transparenten Material verschlossen. Durch den Verschluss wird die jeweilige Lichtquelle effektiv vor äußeren Einflüssen wie Staub, Schmutz oder Feuchtigkeit geschützt, die in das Gehäuse eindringen und die Funktion oder Lebensdauer der Lichtquelle beeinträchtigen könnten. Gleichzeitig bleibt die Lichtübertragung gewährleistet, da das transparente Material das Licht nahezu verlustfrei durchlässt. Ein weiterer Vorteil dieses Verschlusses ist der Schutz vor mechanischen Beschädigungen. Die empfindliche Lichtquelle wird durch die geschlossene Hülse abgeschirmt, was insbesondere bei Vibrationen oder Stößen, die in mobilen Anwendungen wie Fahrzeugmodellen auftreten können, oder auch bei einem zu tiefen Einsetzen des Lichtwellenleiters von Vorteil ist. Darüber hinaus trägt der Verschluss dazu bei, Streulicht innerhalb des Gehäuses zu minimieren, wodurch die Effizienz der Lichteinkopplung in den Lichtwellenleiter zusätzlich verbessert wird. Diese Schutzwirkung macht die Vorrichtung langlebiger, wartungsfreundlicher und insgesamt zuverlässiger im Einsatz.

In einer besonders bevorzugten Weiterbildung der angegebenen Vorrichtung ist in jeder Hülse eine Innenfläche eines die Stirnseite und die Bodenseite verbindenden Mantels mit Linienreibelementen ausgebildet, an denen der in der jeweiligen Hülse aufnehmbare Lichtwellenleiter in und entgegen einer Einschubrichtung reibschlüssig haltbar ist. Beim Einsetzen des Lichtwellenleiters ermöglichen die Linienreibelemente eine kontrollierte Führung, da sie den Lichtwellenleiter stabilisieren und seitliches Verrutschen verhindern. Dies erleichtert das präzise Einführen des Lichtwellenleiters in die Hülse und sorgt dafür, dass dieser schnell und korrekt in Position gebracht werden kann. Während des Betriebs gewährleistet der Reibschluss, dass der Lichtwellenleiter sicher in der Hülse gehalten wird, ohne dass zusätzliche Befestigungselemente wie Schrauben oder Klemmen erforderlich sind. Die Linienreibelemente erzeugen eine gleichmäßige Haltekraft entlang der Mantelfläche, wodurch der Lichtwellenleiter auch bei Vibrationen oder leichten Zugkräften zuverlässig an Ort und Stelle bleibt. Beim Entfernen bietet diese Konstruktion ebenfalls Vorteile, da der Lichtwellenleiter durch Überwinden der Reibkraft problemlos wieder herausgezogen werden kann, ohne dass der Mantel beschädigt wird. Dadurch wird die Handhabung vereinfacht und die Wartung des Systems erleichtert. Insgesamt kombiniert diese Weiterbildung Präzision, Stabilität und Benutzerfreundlichkeit auf effiziente Weise.

Gemäß einem weiteren Aspekt der Erfindung umfasst ein Klemmbausteinmodell eine Vielzahl von Klemmbausteinen, die sich zu einem Gesamtkörper zusammensetzen lassen, eine der angegebenen Vorrichtungen, die sich in den Gesamtkörper einsetzen lässt, einen ersten Lichtwellenleiter zum Transportieren von Licht von der ersten Anschlussschnittstelle zu einer ersten Stelle im Gesamtkörper und einen zweiten Lichtwellenleiter zum Transportieren von Licht von der zweiten Anschlussschnittstelle zu einer zweiten Stelle im Gesamtkörper.

Die oben beschriebenen Eigenschaften, Merkmale und Vorteile dieser Erfindung sowie die Art und Weise, wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1: eine Ansicht eines unfertig aufgebauten Klemmbausteinmodells,
Fig. 2: eine Ansicht einer Vorrichtung zur Verteilung von Licht in dem Klemmbausteinmodell der Fig. 1,
Fig. 3: eine vergrößerte Ansicht eines Ausschnitts der Vorrichtung der Fig. 2,
Fig. 4: eine Ansicht der Vorrichtung der Fig. 2 in einem geöffneten Zustand, und
Fig. 5: eine Strukturdarstellung der Vorrichtung der Fig. 2 mit einer diese Vorrichtung steuernden Fernbedienung.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

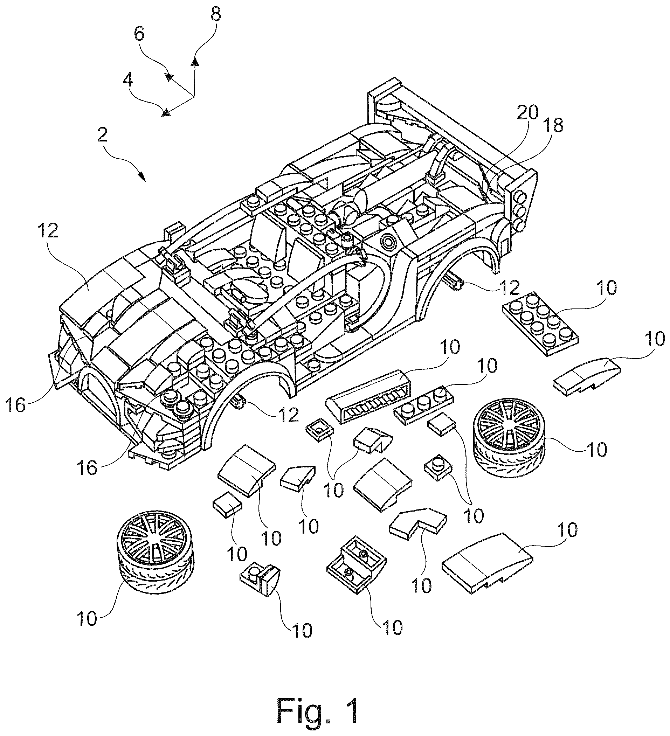

Es wird auf Fig. 1 Bezug genommen, die eine Ansicht eines unfertig aufgebauten Klemmbausteinmodells 2 zeigt.

Das Klemmbausteinmodell 2 ist in der vorliegenden Ausführung als in einer Längsrichtung 4 bewegbares Fahrzeug ausgeführt, das sich in der Längsrichtung 4, einer Querrichtung 6 quer zur Längsrichtung 4 und einer Höhenrichtung 8 quer zur Längsrichtung 4 und quer zur Querrichtung 6 erstreckt.

Das dargestellte Fahrzeug ist aus einer Vielzahl von Klemmbausteinen 10 aufgebaut, die in Fig. 1 der Übersichtlichkeit halber nicht alle mit einem eigenen Bezugszeichen versehen sind. Jeder Klemmbaustein 10 ist ein wiederverwendbarer Baustein zum modularen und skalierbaren Aufbau des Klemmbausteinmodells 2. Jeder Klemmbaustein 10 folgt dabei einem standardisierten Rastermaß, das sicherstellt, dass alle Klemmbausteine 10 unterschiedlicher Größen und Formen nahtlos miteinander verbunden werden können. Die Verbindung erfolgt durch ein mechanisches Klemmprinzip, bei dem in Fig. 1 nicht weiter referenzierte Vorsprünge wie Noppen oder Stifte eines Klemmbausteins 10 in entsprechende, ebenfalls in Fig. 1 nicht weiter referenzierte Vertiefungen eines anderen Klemmbausteins eingepresst werden, wodurch eine stabile, aber lösbare Verbindung entsteht. Diese modulare Bauweise erlaubt nahezu unbegrenzte Kombinationsmöglichkeiten, sodass die Klemmbausteine 10 flexibel zusammengesetzt, zerlegt und wiederverwendet werden können.

Das in Fig. 1 gezeigte Fahrzeug wird rein illustrativ als mögliches Beispiel für das Klemmbausteinmodell 2 herangezogen und daher im Folgenden auch nur grob in seinem Aufbau erläutert. Es umfasst ein Chassis 12, das auf Rädern fahrbar getragen ist. Die entsprechenden Radachsen 14 sind im Bauzustand der Fig. 1 zu sehen; die Räder müssen auf diese Radachsen noch aufgesetzt werden. An der in der Längsrichtung 4 gesehenen Vorderseite des Klemmbausteinmodells 2 sind transparente Bausteine zu sehen, die im fertiggestellten Zustand als Vorderlichter 16 verwendet werden. An diese transparenten Bausteine wird später in einer noch zu beschreibenden Weise von der in der Längsrichtung 4 gesehenen Rückseite her ein Lichtwellenleiter angesetzt, der dann das Vorderlicht 16 beleuchtet. In analoger Weise sind an der in der Längsrichtung 4 gesehenen Rückseite des Klemmbausteinmodells 2 transparente Bausteine vorhanden, die im fertiggestellten Zustand als Rücklichter 18 und als Bremslichter 20 verwendet werden. Auch an diese transparenten Bausteine wird, in der Längsrichtung 4 gesehen, von vorn her in einer noch zu beschreibenden Weise ein Lichtwellenleiter angelegt, um das jeweilige Rücklicht 18 beziehungsweise das jeweilige Bremslicht 20 zu beleuchten.

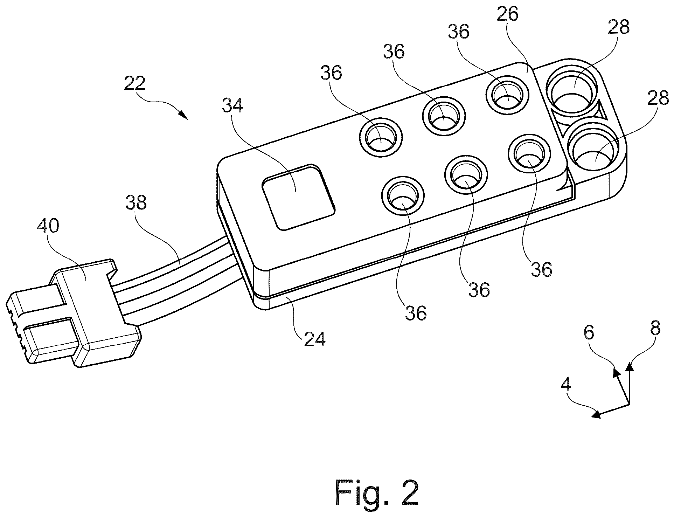

Die Beleuchtung wird in der vorliegenden Ausführung zentral erzeugt und dann, wie zuvor schon angedeutet, per Lichtwellenleiter auf die einzelnen zu beleuchtenden Klemmbausteine verteilt. Hierzu kommt eine zentrale Vorrichtung 22 zum Einsatz, die zunächst anhand von Fig. 2 näher erläutert werden soll.

Die Vorrichtung 22 besitzt einen im Wesentlichen quaderförmigen Aufbau und soll der Einfachheit halber im bereits definierten Koordinatensystem mit ihrer Längsseite in der Längsrichtung 4 ausgerichtet angenommen werden. Sie kann jedoch im Klemmbausteinmodell 2 beliebig platziert werden.

Die Vorrichtung 22 besitzt ein Gehäuse, das aus einer Unterschale 24 und einer entgegen der Höhenrichtung 8 auf die Unterschale 24 aufgesetzten Oberschale 26 aufgebaut ist. An der in der Längsrichtung 4 gesehenen Rückseite durchziehen die Unterschale 24 zwei im oben genannten standardisierten Rastermaß angeordnete Wellenaufnahmen 28 in der Höhenrichtung, um die Vorrichtung 22 im Klemmbausteinmodell beispielsweise an einer bestimmten Stelle fixieren zu können.

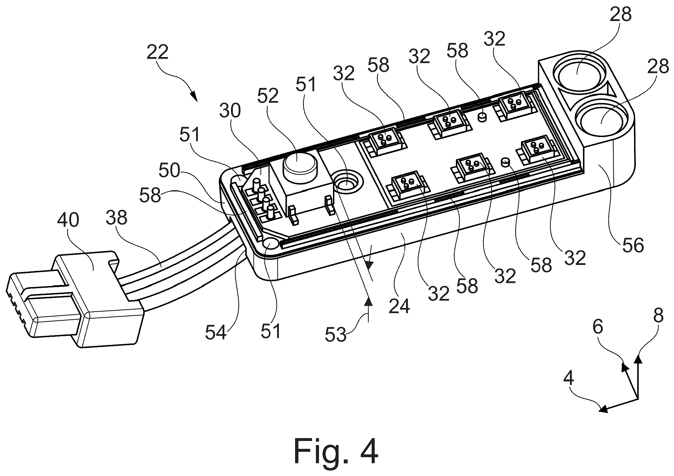

Auf der Unterschale 24 ist eine in Fig. 4 zu sehende Leiterplatte 30 mit Lichtquellen 32 an vorbestimmten Positionen auf der Leiterplatte 30 angebracht. Auf diese vorbestimmten Positionen kommt es in der weiteren Erläuterung von Fig. 2 an. Im Übrigen wird auf die Leiterplatte 30 an späterer Stelle näher eingegangen.

Die somit auf die Leiterplatte 30 aufgesetzte Oberschale 26 durchziehen mehrere nicht weiter referenzierte Durchtrittsöffnungen, durch die Funktionselemente der Vorrichtung 22 geführt sind.

Ein erstes dieser Funktionselemente ist eine Bedientaste 34, mittels der sich in einer später noch zu beschreibenden Weise ein Funktionszustand der Vorrichtung 22 einstellen lässt. Die restlichen Funktionselemente sind transparente Hülsen 36, die im auf die Unterschale 24 aufgesetzten Zustand der Oberschale 26 an den zuvor genannten vorbestimmten Positionen platziert sind, sodass in der Höhenrichtung 8 gesehen über jeder Lichtquelle 32 eine transparente Hülse 36 die jeweilige Lichtquelle 32 in der Längsrichtung 4 und in der Querrichtung 6 überdeckt.

Schließlich ist durch die Unterschale noch ein an die Leiterplatte 30 angeschlossenes Versorgungskabel 38 geführt, an dessen der Leiterplatte gegenüberliegendes Ende ein Anschlussstecker 40 gehalten ist. Der Anschlussstecker kann beliebig ausgeführt werden, weist in der vorliegenden Ausführung allerdings den Aufbau auf, wie er aus der DE 102022114167 B3 bekannt ist. Über die Versorgungsleitung lässt sich die Leiterplatte 30 mit elektrischer Energie und/oder mit Datensignalen versorgen.

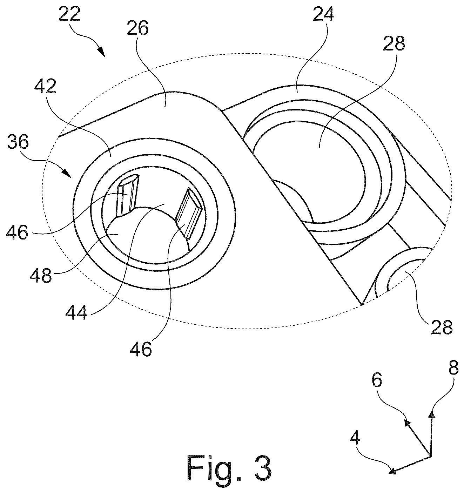

Anhand von Fig. 3 sollen nun die transparenten Hülsen näher erläutert werden.

Grundsätzlich können die Hülsen 36 einstückig mit der Oberschale 26 beispielsweise mittels Spritzguss hergestellt werden. Allerdings müsste dann die gesamte Oberschale 26 aus einem einheitlichen Material hergestellt sein, das den technischen Anforderungen, insbesondere an die Transparenz des Materials, gerecht wird.

Aus diesem Grund sind die Hülsen 36 in der vorliegenden Ausführung in Durchgangsöffnungen durch die Oberschale 26 eingesetzt, die in den Figuren nicht weiter dargestellt sind. Zur Befestigung der Hülsen weisen diese an einer in der Höhenrichtung 8 gesehenen Oberseite einen Flansch 42 auf, der eine Kontaktfläche mit der Oberschale 26 gewährleistet, an der die jeweilige Hülse 36 beispielsweise durch Kleben an der Oberschale 26 befestigt sein kann.

Vom Flansch 42 aus erstreckt sich entgegen der Höhenrichtung 8 in das Innere der Oberschale hinein ein zylinderförmiger Mantel 44, an dessen radial nach innen gerichteten Flächen Linienreibelemente 46 ausgebildet sind. Diese Linienreibelemente 46 erstrecken sich axial in der Höhenrichtung und sind in Umfangsrichtung am Mantel mit einem Abstand von weniger als 180° verteilt, sodass der jeweilige Lichtwellenleiter beim Einschub in die Hülse 36 mechanisch an alle Linienreibelemente 46 angedrückt wird und so in der Hülse 36 gehalten bleibt.

Um ein zu tiefes Einschieben des jeweiligen Lichtwellenleiters entgegen der Höhenrichtung 8 in die Hülse 36 und damit eine Beschädigung der darunter liegenden Lichtquelle 32 zu vermeiden, weisen die Hülsen 36 an ihrer in der Höhenrichtung 8 gesehenen, dem Flansch 42 gegenüberliegenden Seite ein axiales Anschlagelement auf. Dieses kann beispielsweise ein radial nach innen gerichteter Flansch sein. In der vorliegenden Ausführung ist dieses Anschlagelement ein die Hülse verschließender Boden 48, sodass die Lichtquellen 32 nicht nur mechanisch gegen ein zu tiefes Einschieben des Lichtwellenleiters, sondern auch gegen von außen eindringende Verunreinigungen wie Staub geschützt sind.

Im Weiteren wird nun auf die in Fig. 4 abgebildete Unterschale 24 eingegangen, auf der die Leiterplatte 30 getragen ist.

Die Unterschale 24 besitzt einen Haltefuß 50, der an seiner in der Längsrichtung 4 gesehenen Vorderseite sowie ein wenig in der Längsrichtung 4 zurückgesetzt mittig drei Durchgangsöffnungen 51 in der Höhenrichtung 8 aufweist, durch die Befestigungsmittel wie beispielsweise Schrauben zur Anbindung der Oberschale 26 an die Unterschale 24 geführt werden können. Zwischen diesen drei Durchgangsöffnungen 51 ist ein Taster 52 zur Aufnahme eines Drucks entgegen der Höhenrichtung 8 auf der Bedientaste 34 und zur Umwandlung des Drucks in ein elektrisches Signal angeordnet. Darauf wird an späterer Stelle näher eingegangen. Der Taster 52 besitzt eine nicht näher referenzierte Taste, die in einem nicht näher referenzierten Tasterkörper quer zur Höhenrichtung 8 geführt und rückstellend gelagert ist. Das ist an sich bekannt und braucht nicht weiter erläutert zu werden. Der Tasterkörper besitzt allerdings eine Körperhöhe 53, die auf eine nicht näher referenzierte Höhe der Oberschale 26 derart abgestimmt ist, dass beim Auflegen der Oberschale 26 auf die Unterschale 24 die Oberschale 26 den Tasterkörper mechanisch kontaktiert und so die Leiterplatte 30 entgegen der Höhenrichtung 8 gegen die Unterschale 24 drückt. Durch die Platzierung der Durchgangsöffnungen 51 um den Taster 52 herum wird der so aufgebrachte und die Leiterplatte 30 stabilisierende Druck entgegen der Höhenrichtung 8 im Falle von auf Zug wirkenden Verbindungsmitteln, wie vor allem im Falle von Schrauben, weiter verstärkt, sodass ein sicherer Halt der Unterschale 24, der Oberschale 26 und der Leiterplatte 30 in Bezug auf Stabilität und Positionierung gewährleistet ist.

Zwischen den beiden Durchgangsöffnungen 51 an der in der Längsrichtung 4 gesehenen Vorderseite ist an der Unterseite des Haltefußes 50 eine Nut 54 ausgebildet, in die das Versorgungskabel 38 eingelegt werden kann. Die Nut 54 mündet schließlich in eine weitere, in der Darstellung von Fig. 3 nicht sichtbare Durchgangsöffnung, durch die das Versorgungskabel 38 zur Leiterplatte 30 geführt wird.

Auf der den beiden Durchgangsöffnungen 51 in der Längsrichtung 4 gegenüberliegenden Seite der Unterschale 24 schließt sich an den Haltefuß 50 eine Anschlagschulter 56 an, durch die die beiden oben genannten Wellenaufnahmen 28 geführt sind. Auf der in der Höhenrichtung 8 gesehenen Oberseite des Haltefußes 50 sind zudem Positionierungshilfen 58 in Form von Streben und Pins ausgebildet, mit denen sich die Leiterplatte 30 und die Oberschale 26 an der Unterschale 24 positionieren lassen, sodass die oben erläuterte Ausrichtung der Hülsen 36 über den Lichtquellen 32 sichergestellt werden kann.

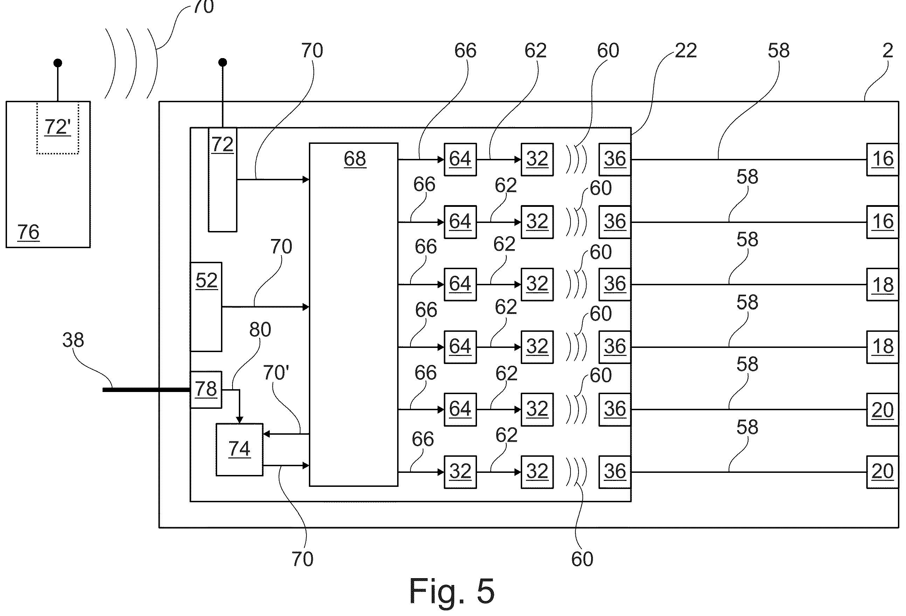

Abschließend wird nun die Funktion der Vorrichtung 22 im Klemmbausteinmodell 2 anhand von Fig. 5 näher erläutert.

In Fig. 5 sind die Lichtwellenleiter als Linien zwischen den Hülsen 36 und den Beleuchtungselementen 16, 18, 20 im Klemmbausteinmodell 2 angedeutet und mit dem Bezugszeichen 58 versehen. Das durch die Lichtquellen 32 über die Hülsen 36 an die Lichtwellenleiter 58 abgegebene Licht ist mit dem Bezugszeichen 60 gekennzeichnet.

Zum Erzeugen des Lichts 60 wird jede Lichtquelle 32 mit einem individuellen Lichtquellensteuersignal 62 betrieben, das von einer individuellen Lichtsteuerung 64 für jede Lichtquelle 32 ausgegeben wird. Die individuellen Lichtsteuerungen 64 empfangen zur Erzeugung ihres jeweiligen Lichtquellensteuersignals 62 eine individuelle Steueranweisung 66 aus einer übergeordneten Steuereinrichtung 68. Die Steueranweisungen 66 können beliebig ausgestaltet sein und beispielsweise Befehle wie "Blinken", "Helligkeit X" oder "Farbe Y" enthalten. Die jeweilige individuelle Lichtsteuerung 64 dekodiert diese Befehle und generiert ein geeignetes individuelles Steuersignal 62, um den Befehl mit der ihr zugeordneten Lichtquelle 32 umzusetzen. Sind die Lichtquellen beispielsweise als in ihrer Farbe steuerbare Dioden ausgebildet, so kann der Befehl "Blinken" durch ein pulsierend ein- und ausgeschaltetes Steuersignal 62 umgesetzt werden. Der Befehl "Helligkeit X" lässt sich durch die Signalstärke des Steuersignals 62 umsetzen, während der Befehl "Farbe Y" durch ein mehrdimensionales Steuersignal 62 realisiert werden kann, bei dem jede Komponente einer beizumischenden Farbe zur Erreichung der Zielfarbe zugeordnet ist und ebenfalls in ihrer Signalstärke eingestellt wird.

Die übergeordneten Steueranweisungen 66 werden von der Steuereinrichtung 68 basierend auf Konfigurationsdaten 70 generiert, die entweder aus einer Netzwerkschnittstelle 72, dem Taster 52 oder einem Speicher 74 in einer beliebig kodierten, aber für die übergeordnete Steuereinrichtung 68 entschlüsselbaren Form stammen. Diese Konfigurationsdaten 70 müssen so gestaltet sein, dass die übergeordnete Steuereinrichtung 68 die gewünschte Lichtquelle 32 ansteuern und den dafür notwendigen Befehl generieren kann.

Eine einfache Möglichkeit besteht darin, die Konfigurationsdaten 70 über eine geeignete Fernbedienung 76 zu senden, die über eine analoge Netzwerkschnittstelle 72' zur Netzwerkschnittstelle 72 verfügt. Eine geeignete Fernbedienung 76 wäre beispielsweise ein Smartphone mit einem Bluetooth-Modul als Netzwerkschnittstelle 72', auf dem ein Steuerprogramm läuft. Dieses Programm, das durch einen Benutzer bedient wird, erzeugt die Konfigurationsdaten 70 und überträgt sie drahtlos per Bluetooth an die Netzwerkschnittstelle 72 der Vorrichtung 22. Die praktische Umsetzung des Programms unterliegt der freien Gestaltung des Programmierers und braucht hier nicht weiter erläutert zu werden.

Alternativ kann der Benutzer den Taster 52 verwenden, um die Konfigurationsdaten 70 zu erzeugen. Dies kann durch eine festgelegte Abfolge von Tastendrücken geschehen. Beispielsweise könnte ein kurzer Tastendruck die Steuerbox in einen Modus versetzen, in dem sie Konfigurationsdaten 70 basierend auf dem Taster 52 generiert. Dabei erzeugen alle Lichtquellen 32 einen voreingestellten Lichteffekt, der an späterer Stelle näher erläutert wird. Bei einem weiteren kurzen Drücken wechseln alle Lichtquellen 32 gemeinsam zu einem dauerhaften Weißlicht. Jedes weitere kurze Drücken alterniert die Farbe aller Lichtquellen 32, etwa von Rot über Grün und Gelb bis hin zu Blau. Ein abschließender kurzer Druck schaltet die Steuerbox aus.

Das bedeutet, dass bei der Steuerung per Taster alle individuellen Lichtsteuerungen 64 von der übergeordneten Steuereinrichtung 68 mit derselben Steueranweisung 66 adressiert werden. Dies ist sinnvoll, da die gezielte Steuerung einzelner Lichtquellen 32 per Taster 52 für den durchschnittlichen Benutzer wahrscheinlich zu kompliziert wäre.

Wenn Konfigurationsdaten 70 empfangen und in Steueranweisungen 66 umgesetzt werden, können diese zusätzlich als Backupdaten 70' im Speicher 74 hinterlegt werden. Sollte die elektrische Energieversorgung der Vorrichtung 22 unerwartet ausfallen, kann der Zustand der Vorrichtung 22 beim Wiedereinschalten basierend auf den im Speicher 74 hinterlegten Konfigurationsdaten 70 wiederhergestellt werden.

Der Taster 52 kann auch verwendet werden, um die übergeordnete Steuereinrichtung 68 in einen Modus zu versetzen, in dem sie Konfigurationsdaten 70 nicht vom Taster 52, sondern aus der Netzwerkschnittstelle 72 akzeptiert. Dies kann beispielsweise durch einen langen Tastendruck von mindestens drei Sekunden geschehen. Auch in diesem Modus kann die übergeordnete Steuereinrichtung 68 die zuletzt über die Netzwerkschnittstelle 72 empfangenen Konfigurationsdaten 70 als Backupdaten 70' im Speicher hinterlegen.

Im Falle eines Neustarts, etwa nach einem Stromausfall, kann eine Stromversorgungseinheit 78 der Vorrichtung 22 einen IRQ-Befehl 80 an den Speicher 74 senden, um den Betrieb der Lichtquellen 32 basierend auf den im Speicher 74 hinterlegten Konfigurationsdaten 70 wieder aufzunehmen.

Die Steuerschaltungen 64 und 68 sind in diesem Ausführungsbeispiel der besseren Übersichtlichkeit halber getrennt dargestellt. Sie lassen sich jedoch problemlos in einem gemeinsamen Mikrocontroller implementieren und müssen nicht zwangsläufig separat realisiert werden.

## Patentansprüche

1. Vorrichtung (22) zur Verteilung von Licht (60) in einem Klemmbausteinmodell (2), umfassend:
- eine erste Lichtquelle (32) und eine zweite Lichtquelle (32),
- eine Steuerschaltung (30) zur Steuerung eines Betriebszustandes der ersten Lichtquelle (32) und eines Betriebszustandes der zweiten Lichtquelle (32),
- ein die Steuerschaltung (30) und die Lichtquellen (32) einhausendes Gehäuse (24, 26)
-- mit einer ersten Anschlussschnittstelle (36) zum Halten eines ersten Endes eines ersten Lichtwellenleiters (58) in einer Position, in der der erste Lichtwellenleiter (58) in der Lage ist, mit seinem ersten Ende das aus der ersten Lichtquelle (32) abgegebene Licht (60) zu empfangen und zu seinem zweiten Ende zu leiten, und
-- mit einer zweiten Anschlussschnittstelle (36) zum Halten eines ersten Endes eines zweiten Lichtwellenleiters (58) in einer Position, in der der zweite Lichtwellenleiter (58) in der Lage ist, mit seinem ersten Ende das aus der zweiten Lichtquelle (32) abgegebene Licht (60) zu empfangen und zu seinem zweiten Ende zu leiten.

2. Vorrichtung (22) nach Anspruch 1, wobei die Steuerschaltung (30) ein erstes Steuerelement (64) zur individuellen Steuerung der ersten Lichtquelle (32), ein zweites Steuerelement (64) zur individuellen Steuerung der zweiten Lichtquelle (32) und ein drittes Steuerelement (68) zur gemeinsamen Steuerung der ersten und zweiten Lichtquelle umfasst.

3. Vorrichtung (22) nach Anspruch 2, wobei das dritte Steuerelement (68) an einen Schalter (52) zum gemeinsamen Einstellen der Betriebszustände der ersten und zweiten Lichtquelle (32) angeschlossen ist.

4. Vorrichtung (22) nach Anspruch 2 oder 3, umfassend eine Datenübertragungsschnittstelle (72), die eingerichtet ist eine individuelle Steueranweisung zum Einstellen des Betriebsszutandes der ersten Lichtquelle (32) zu empfangen und an das erste Steuerelement (64) weiterzuleiten sowie eine individuelle Steueranweisung zum Einstellen des Betriebsszutandes der zweiten Lichtquelle (32) zu empfangen und an das zweite Steuerelement (64) weiterzuleiten.

5. Vorrichtung (22) nach Anspruch 4, wobei die Datenübertragungsschnittstelle (72) eingerichtet ist, die Steueranweisung drahtlos, vorzugsweise mit einem Protokoll nach Bluetooth zu empfangen.

6. Vorrichtung (22) nach einem der Ansprüche 3 bis 5 umfassend einen Speicher (74) zum Speichern der eingestellten Betriebszustände der ersten und zweiten Lichtquelle (32), vorzugsweise in Form der zuletzt ausgeführten Steueranweisung.

7. Vorrichtung (22) nach einem der vorstehenden Ansprüche, wobei jede Anschlussschnittstelle (36) jeweils als durch das Gehäuse (24, 26) geführte Hülse ausgeführt ist, die an einer zur Gehäuseaußenseite hin gerichteten Stirnseite zur Aufnahme des jeweiligen Lichtwellenleiters (58) geöffnet und mit ihrer Bodenseite oberhalb der jeweiligen Lichtquelle (32) angeordnet ist.

8. Vorichtung (22) nach Anspruch 7, wobei die Bodenseite jeder Hülse mit einem transparenten Material verschlossen ist.

9. Vorrichtung (22) nach Anspruch 7 oder 8, wobei in jeder Hülse eine Innenfläche eines die Stirnseite und die Bodenseite verbindenden Mantels mit Linienreibelementen (46) ausgebildet ist, an denen der in der jeweiligen Hülse aufnehmbare Lichtwellenleiter (58) in und entgegen einer Einschubrichtung reibschlüssig haltbar ist.

10. Klemmbausteinmodell (2), umfassend:
- eine Vielzahl von Klemmbausteinen ()10, die sich zu einem Gesamtkörper zusammensetzen lassen,
- eine in den Gesamtkörper einsetzbare Vorrichtung (22) nach einem der vorstehenden Ansprüche,
- einen ersten Lichtwellenleiter (58) zum Transportieren von Licht von der ersten Anschlussschnittstelle (36) zu einer ersten Stelle im Gesamtkörper, und
- einen zweiten Lichtwellenleiter (58) zum Transportieren von Licht von der zweiten Anschlussschnittstelle (58) zu einer zweiten Stelle im Gesamtkörper.
